# FASCICULE DE BREVET EUROPEEN

(11) **EP 2 279 901 B1**
(45) Date de publication et mention de la délivrance du brevet: **13.03.2013**
(21) Numéro de dépôt: 10168101.3
(22) Date de dépôt: 01.07.2010
(51) Int. Cl.: B60N 2/22, B60N 2/235

(54) **Système de liaison entre deux articulations**
Verbindungssystem zwischen zwei Gelenke.
Linking system between two articulations.

(30) Priorité: 28.07.2009 FR 0955275
(43) Date de publication de la demande: 02.02.2011
(73) Titulaire: GRUPO ANTOLIN-INGENIERIA, S.A., 09080 Burgos (ES)
(72) Inventeur: Gagnaire, Eric, 42600, SAVIGNEUX (FR)
(74) Mandataire: Delorme, Nicolas

(56) Documents cités:
- DE-C1- 19 947 873
- FR-A1- 2 915 934
- US-B1- 6 767 068

## Description

La présente invention se rapporte à un siège pour véhicule, notamment à un siège pour véhicule présentant un dossier inclinable.

Un siège pour automobile présentant un dossier inclinable comporte généralement des éléments de verrouillage pour maintenir le dossier dans une position inclinée fixée par un utilisateur. Installés de chaque côté du siège pour automobile, les éléments de verrouillage sont reliés par une tige de liaison qui relie cinématiquement les deux éléments de verrouillage et permet un fonctionnement synchronisé de ces derniers afin de libérer ou bloquer la rotation du dossier. L'utilisateur qui souhaite modifier l'inclinaison du dossier d'un tel siège manipule une unique commande de déverrouillage qui actionne un premier élément de verrouillage, le second élément de verrouillage étant synchronisé par un mouvement de rotation de la tige de liaison transmis à l'arbre dudit second élément. Pour que la synchronisation s'effectue correctement, les arbres des éléments de verrouillage doivent être axialement alignés.

Cependant, il arrive fréquemment que, lors de l'assemblage d'un tel siège pour automobile, les éléments de verrouillage ne soient pas correctement alignés, ce qui, d'une part, peut rendre difficile la fixation de la tige de liaison et, d'autre part, peut gêner la rotation de la tige de liaison et donc le fonctionnement simultané des deux éléments de verrouillage.

La demande de brevet FR 2 855 469 décrit un dispositif inclinable de siège pour automobile permettant la fixation d'une tige de liaison entre deux éléments de verrouillage présentant un défaut d'alignement. Bien que l'assemblage d'un siège pour automobile soit facilité par un tel dispositif, la rotation de la tige de liaison ne l'est cependant pas par ce dispositif en cas de mauvais alignement des éléments de verrouillage.

Par ailleurs, en cas de choc lors d'un accident impliquant le véhicule dans lequel il est monté, un siège pour automobile peut subir des déformations plus ou moins importantes, qui peuvent provoquer un décalage axial important des éléments de verrouillage ou encore une variation de la distance entre les éléments de déverrouillage. Durant une telle déformation, il est fréquent que le déverrouillage accidentel d'un des éléments de verrouillage induise le déverrouillage de l'autre élément. Inversement, lors d'un choc, il peut arriver également que l'une des extrémités de la tige de liaison se désolidarise de l'arbre d'un des éléments de verrouillage, rendant alors impossible la rotation du dossier, ce qui est être très préjudiciable en cas d'évacuation du véhicule.

Enfin, la manipulation d'un siège pour automobile est généralement opérée par un passager occupant ledit siège. Or , le passager en appui sur le dossier peut induire une déformation du siège et donc un décalage axial des éléments de verrouillage qui peut engendrer à son tour un blocage d'un des éléments de verrouillage.

La présente invention a pour objet de remédier en tout ou partie aux différents inconvénients cités précédemment.

Dans ce contexte technique, la présente invention a pour objet de fournir un siège pour véhicule dont le fonctionnement soit tolérant des dispersions de fabrication. La présente invention a également pour objet de fournir un siège qui présente un comportement en cas d'accident offrant plus de sécurité à son passager qu'un siège pour automobile classique.

A cet effet, la présente invention se rapporte à un siège pour véhicule comprenant :
- une assise ;
- un dossier articulé sur l'assise autour d'un axe de rotation ;
- un premier organe de verrouillage du dossier par rapport à l'assise positionné sur l'un des côtés du siège et coopérant avec une commande de déverrouillage ;
- un second organe de verrouillage du dossier par rapport à l'assise positionné sur l'autre côté du siège ;
**caractérisé en ce que** les premier et second organes de verrouillage sont synchronisés par, d'une part, une tringle de transmission s'étendant selon un premier axe transversal et fixée à l'une de ses extrémités au premier organe de verrouillage, une lumière étant ménagée à l'autre extrémité de la tringle de transmission, un arbre étant solidaire du second organe de verrouillage et s'étendant selon un second axe transversal orienté en direction du premier organe de verrouillage, ledit arbre étant inséré dans ladite lumière avec un jeu fonctionnel permettant d'absorber des dispersions de positionnement des organes de verrouillage caractérisé en ce que ladite lumière présente au moins un méplat et, d'autre part, ledit arbre présente au moins une portion tronconique comportant au moins un méplat.

Ainsi, le siège pour véhicule selon la présente invention présente un fonctionnement tolérant aux dispersions de positionnement de ses organes de verrouillage.

De plus, le siège pour véhicule selon l'invention présente un comportement amélioré en cas d'accident en comparasion d'un siège pour automobile classique : en effet, la liaison entre la tringle de transmission et l'arbre du second organe de verrouillage autorise un désaxement ou une variation de la distance entre les deux éléments de verrouillage, sans rupture de ladite liaison, l'arbre pouvant coulisser dans la lumière de la tringle de transmission. En particulier, en cas de déformation modérée d'un siège pour véhicule à la suite d'un choc, le dossier du siège est moins susceptible d'être bloqué qu'un siège classique.

Par ailleurs, le siège pour véhicule selon la présente invention facilite l'assemblage de la tringle de transmission puisque l'alignement des organes de verrouillage n'est pas nécessaire pour assurer l'insertion de l'arbre dans la lumière : la portion tronconique permet un décalage axial, tandis que les méplats permettent la transmission du mouvement de rotation de la tringle de transmission en prenant appui sur les bords de la lumière.

Enfin, un siège pour véhicule selon l'invention rend également plus facile le fonctionnement synchronisé des organes de verrouillage lorsqu'un passager est assis sur ledit siège : en effet la liaison entre la tringle de transmission et l'arbre autorise une liberté de mouvement qui peut être suffisante pour compenser une différence de force appliquée sur les organes de verrouillage par le passager.

Dans un mode de réalisation de l'invention, l'extrémité de ladite tringle de transmission comportant la lumière a sensiblement une forme de « L » qui comporte une première portion s'étendant dans le sens de la longueur de la tringle de transmission et une seconde portion formant patte transversale s'étendant à angle droit à partir de la première portion, ladite lumière étant ménagée dans la seconde portion. Une tringle de transmission ainsi formée est économique à produire et réduit donc les coûts de fabrication d'un siège selon l'invention.

Dans un mode de réalisation de l'invention, la portion tronconique est décroissante en direction du premier organe de verrouillage.

Dans un mode de réalisation de l'invention, la portion tronconique présente une allure générale de tronc de pyramide à base carrée. Une allure générale de tronc de pyramide à base carré permet de minimiser le rattrapage du jeu fonctionnel lors de la manipulation de la commande de déverrouillage.

Dans un mode de réalisation de l'invention, la lumière a une forme sensiblement carrée. Une lumière présentant une forme conjuguée de la portion tronconique permet également de réduire le rattrapage de jeu fonctionnel.

Dans un mode de réalisation de l'invention, le siège pour véhicule comporte un joint disposé entre l'arbre et la lumière. La présence d'un joint entre l'arbre et la lumière permet de diminuer les bruits occasionnés par le siège pour véhicule.

L'invention sera mieux comprise à l'aide de la description détaillée qui est exposée ci-dessous en regard des dessins annexés dans lesquels :
La figure 1 représente une vue en perspective d'un siège pour véhicule selon la présente invention, dépourvu de garnissage ;
La figure 2 représente une vue en perspective d'une tringle de transmission installée sur un siège pour véhicule selon l'invention ;
La figure 3 représente une vue de détail d'un arbre et d'une tringle de transmission lors du montage d'un siège selon l'invention, avant que l'arbre solidaire du second organe de verrouillage ne soit inséré dans la lumière de ladite tringle de transmission ;
Les figures 4a et 4b représentent des vues de détail d'un arbre inséré dans la lumière de l'extrémité en « L » d'une tringle de transmission d'un siège selon l'invention.

Dans la description qui suit les termes longitudinal et transversal se référent au réferentiel véhicule XYZ.

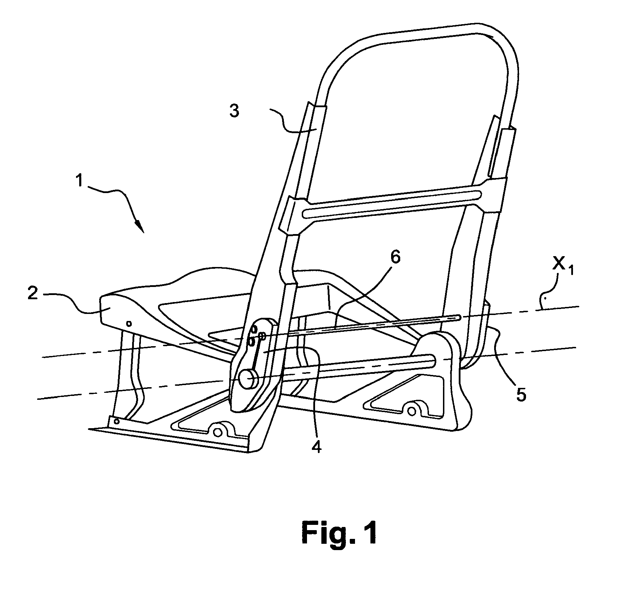

Un siège 1 pour véhicule, représenté à la Figure 1 sans garnissage, comprend une assise 2 et un dossier 3 inclinable articulé selon un axe de rotation transversal. Un premier organe de verrouillage 4 positionné sur l'un des côtés du siège 1 et un second organe de verrouillage 5 positionné sur l'autre côté du siège 1 permettent de verrouiller le dossier 3 dans une position inclinée choisie par un utilisateur. De façon traditionnelle, un organe de verrouillage peut comprendre, par exemple, deux grains dentés qui peuvent être écartés l'un de l'autre lors du déverrouillage dudit organe. Afin de modifier l'inclinaison du dossier 3, une commande de déverrouillage, non représentée sur la Figure 1, manipulable par l'utilisateur coopère avec le premier organe de verrouillage 4 afin de déverrouiller ledit moyen, par exemple en écartant les grains dentés. La mise en rotation du dossier 3 nécessite cependant le déverrouillage simultané des premier et second organes de verrouillage 4, 5 et une tringle de transmission 6 est disposée à cet effet entre lesdits organes de verrouillage 4, 5.

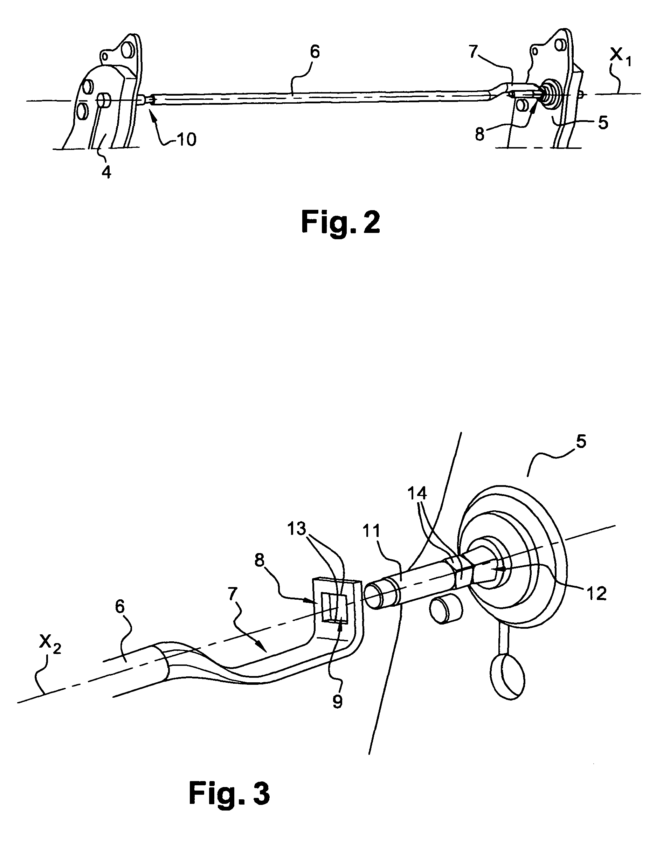

Le premier organe de verrouillage 4 est agencé de manière à ce qu'une action sur la commande de déverrouillage induise une rotation de la tringle de transmission 6 qui commande alors au second organe de verrouillage 5 de se verrouiller ou de se déverrouiller, de façon synchronisée avec le premier organe de verrouillage 4. La tringle de transmission 6, s'étendant selon un premier axe transversal X₁ a une forme de « L », telle que représentée aux Figures 2, 3, 4a et 4b, comportant une première portion 7 s'étendant dans le sens de la longueur de la tringle de transmission 6 et une seconde portion 8 formant patte transversale s'étendant à angle droit à partir de la première portion 7. Une lumière 9 est ménagée dans la seconde portion 8. Cette lumière 9 présente au moins un méplat 13 et a, par exemple, une forme carrée. L'extrémité 10 opposée à la seconde portion 8 est fixée de façon permanente au premier organe de verrouillage 4.

Le premier axe transversal X₁ est distinct de l'axe de rotation transversal du dossier 3.

Un arbre 11 présentant une portion tronconique 12 qui comporte au moins un méplat 14 est solidaire du second organe de verrouillage 5 et s'étendant selon un second axe transversal X₂ passant par le premier organe de verrouillage 4 (ce second axe transversal X₂ est omis sur la Figure 2 pour des raisons de clarté). Ledit arbre 11 est inséré dans la lumière 9. Au repos, l'arbre 11 et la lumière 9 ne sont pas nécessairement en contact du fait de la liaison flottante entre ces deux éléments. Afin de réduire les bruits éventuels de contacts entre la tringle de transmission 6 et l'arbre 11, le siège peut être muni d'un joint, non représenté, disposé entre la lumière 9 et l'arbre 11. Un tel joint est composé d'un matériau élastique tel que du caoutchouc par exemple. Lorsque l'utilisateur manipule la commande de déverrouillage le mouvement de rotation de la tringle de transmission 6 rattrape dans un premier temps le jeu fonctionnel au niveau de la liaison entre ladite tringle et l'arbre 11. Ce rattrapage de jeu est complètement transparent pour l'utilisateur puisqu'il ne nécessite qu'une variation angulaire négligeable. Ensuite, lors de la mise en rotation de la tringle de transmission 6, les méplats 13, 14 viennent en appui l'un de l'autre et permettent la transmission d'un mouvement de rotation de la tringle de transmission 6 au second organe de verrouillage 5.

Suivant l'action exercée sur la commande de déverrouillage, la rotation de la tringle de transmission 6 s'effectue dans le sens horaire ou anti-horaire, autour du premier axe transversal X₁, le sens induisant alors un verrouillage ou un déverrouillage du second organe de verrouillage 5.

Dans un mode de réalisation de l'invention, représenté sur les Figures 2 à 4, la portion tronconique 12 présente une allure générale de tronc de pyramide à base carrée. Une forme carrée de la lumière 9, de même qu'une portion tronconique 12 ayant une allure générale de pyramide à base carrée permet de réduire le rattrapage de jeu nécessaire au début de la manipulation de la commande de déverrouillage. Les dimensions respectives de la portion tronconique 12 et de la lumière 9 sont choisies afin de permettre un assemblage de l'arbre 11 dans la lumière 9 avec un jeu.

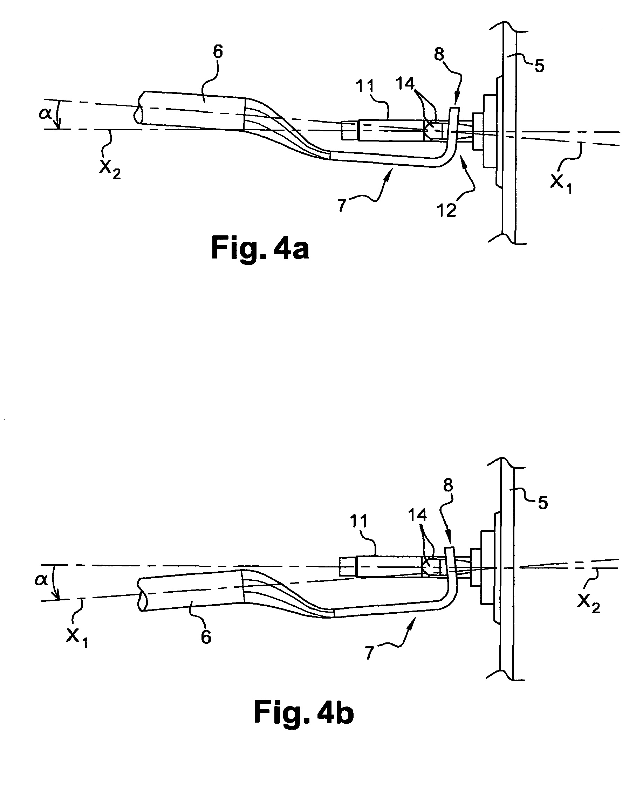

Comme le montrent les figures 4a et 4b, l'assemblage de la tringle de transmission 6 et de l'arbre 11 autorise un défaut d'alignement des premier et second organes de verrouillage 4, 5 puisque les premier et second axes transversaux X₁ et X₂ peuvent être sécants et former un angle α non nul. Les formes conjuguées de la lumière 9 et de la portion tronconique 12 de l'arbre 11, permettent à l'assemblage d'accepter un défaut angulaire important, représenté sur les Figures 4a et 4b par l'angle orienté de X₁ vers X₂ et noté α. Comme il apparait sur les Figures 4a et 4b cet angle peut être indifféremment orienté dans le sens horaire ou anti-horaire.

Par ailleurs, la forme de la portion tronconique 12 et les dimensions des méplats 13, 14 peuvent être agencés de façon à autoriser un coulissement de la tringle de transmission 6 sur l'arbre 11 sans rompre la liaison entre ses deux éléments. Ainsi, en cas de déformation importante suite à un choc, les organes de verrouillage peuvent rester modérément synchronisés. A cet effet, la portion tronconique 12 est orientée de façon à ce qu'elle décroisse en direction du premier organe de verrouillage 4.

Ainsi, la présente invention décrit un siège 1 pour véhicule dont le fonctionnement est tolérant aux dispersions de positionnement des organes de verrouillage. En particulier, la présente invention décrit un siège 1 pour véhicule qui permet un assemblage facile de la tringle de transmission 6 puisque l'alignement des premier et second organes de verrouillage 4, 5 n'est pas nécessaire pour assurer l'insertion de l'arbre dans la lumière. Un tel siège 1 pour véhicule permet également de renforcer la sécurité de son passager en cas de choc, en comparaison d'un siège pour automobile classique puisque la liaison entre la tringle de transmission 6 et l'arbre 11 du second organe de verrouillage 5 autorise un décalage axial ou une variation de la distance entre les premier et second organes de verrouillage 4, 5, sans rupture de ladite liaison : l'arbre 11 peut coulisser dans la lumière 9 de la tringle de transmission 6. En particulier, en cas de déformation modérée du siège 1 pour véhicule à la suite d'un choc, le dossier 3 du siège 1 pour véhicule est moins susceptible d'être bloqué qu'un siège classique. Un siège 1 pour véhicule selon l'invention rend également plus facile le fonctionnement synchronisé des organes de verrouillage 4, 5 lorsqu'un passager est assis sur ledit siège : en effet la liaison entre la tringle de transmission 6 et l'arbre 11 autorise une liberté de mouvement qui peut être suffisante pour compenser une différence de force appliquée sur les organes de verrouillage 4, 5 par le passager.

Par ailleurs, la forme de la tringle de transmission 6 permet de réduire les coûts de fabrication du siège 1 pour véhicule en comparaison d'un siège pour automobile classique.

Bien entendu, les exemples de réalisations évoqués ci-dessus ne présentent aucun caractère limitatif et d'autres détails et améliorations peuvent être apportés au siège pour véhicule selon l'invention, sans pour autant sortir du cadre de l'invention où d'autres formes de sièges pour véhicule peuvent être réalisées. En particulier, on peut envisager que la lumière 9 ait une forme hexagonale, et que de même l'arbre 11 ait une allure générale en tronc de pyramide à base hexagonale afin de réduire encore le rattrapage du jeu fonctionnel lors de la manipulation de la commande de déverrouillage.

## Revendications

1. Siège (1) pour véhicule comprenant :
- une assise (2) ;
- un dossier (3) articulé sur l'assise (2) autour d'un axe de rotation ;
- un premier organe de verrouillage (4) du dossier (3) par rapport à l'assise (2) positionné sur l'un des côtés du siège (1) et coopérant avec une commande de déverrouillage ;
- un second organe de verrouillage (5) du dossier (3) par rapport à l'assise (2) positionné sur l'autre côté du siège (1) ;
**caractérise en ce que** les premier et second organes de verrouillage (4, 5) sont synchronisés par, d'une part, une tringle de transmission (6) fixée à l'une de ses extrémités (10) au premier organe de verrouillage (4), une lumière (9) étant ménagée à l'autre extrémité de la tringle de transmission (6), un arbre (11) étant solidaire du second organe de verrouillage (5) et s'étendant en direction du premier organe de verrouillage (4), ledit arbre (11) étant inséré dans ladite lumière (9) avec un jeu fonctionnel permettant d'absorber des dispersions de positionnement des organes de verrouillage (4, 5), **caractérisé en ce que** ladite lumière (9) présente au moins un méplat (13) et, d'autre part, ledit arbre (11) présente au moins une portion tronconique (12) comportant au moins un méplat (14).

2. Siège (1) pour véhicule selon la revendication 1, **caractérisé en ce que** l'extrémité de ladite tringle de transmission (6) comportant la lumière (9) a sensiblement une forme de « L » qui comporte une première portion (7) s'étendant dans le sens de la longueur de la tringle de transmission (6) et une seconde portion (8) formant patte transversale s'étendant à angle droit à partir de la première portion (7), ladite lumière (9) étant ménagée dans la seconde portion (8).

3. Siège (1) pour véhicule selon la revendication 1 ou 2, **caractérisé en ce que** la portion tronconique (12) est décroissante en direction du premier organe de verrouillage (4).

4. Siège (1) pour véhicule selon l'une des revendications 1 à 3, **caractérisé en ce que** la portion tronconique (12) présente une allure générale de tronc de pyramide à base carrée.

5. Siège (1) pour véhicule selon l'une des revendications 1 à 4, **caractérisé en ce que** la lumière (9) a une forme sensiblement carrée.

6. Siège (1) pour véhicule selon l'une des revendications 1 à 5, **caractérisé en ce qu'**il comporte un joint disposé entre l'arbre (11) et la lumière (9).

## Claims

1. A seat (1) for a vehicle, comprising:
- a seat cushion (2);
- a backrest (3) articulated on the seat cushion (2) around an axis of rotation;
- a first member (4) for locking the backrest (3) relative to the seat cushion (2) position on one of the sides of the seat (1) and cooperating with an unlocking command;
- a second member (5) for locking the backrest (3) relative to the seat cushion (2) positioned on the other side of the seat (1);
the first and second locking members (4, 5) are synchronized on the one hand by a transmission rod (6) fastened at one of its ends (10) to the first locking member (4), a lumen (9) being formed at the other end of the transmission rod (6), a shaft (11) being secured to the second locking member (5) and extending toward the first locking member (4), said shaft (11) being inserted into said lumen (9) with functional play making it possible to absorb positioning dispersions of the locking members (4, 5), **characterized in that** said lumen (9) has at least one flat portion (13) and, on the other hand, said shaft (11) has at least one tapered portion (12) including at least one flat portion (14).

2. The vehicle seat (1) according to claim 1, **characterized in that** the end of said transmission rod (6) including the lumen (9) is substantially in the shape of an "L" that has a first portion (7) extending in the direction of the length of the transmission rod (6) and a second portion (8) forming a transverse tab extending at a right angle from the first portion (7), said lumen (9) being formed in the second portion (8).

3. The vehicle seat (1) according to claim 1 or 2, **characterized in that** the tapered portion (12) decreases toward the first locking member (4).

4. The vehicle seat (1) according to one of claims 1 to 3, **characterized in that** the tapered portion (12) generally resembles a truncated pyramid with a square base.

5. The vehicle seat (1) according to one of claims 1 to 4, **characterized in that** the lumen (9) has a substantially square shape.

6. The vehicle seat (1) according to one of claims 1 to 5, **characterized in that** it includes a seal arranged between the shaft (11) and the lumen (9).

## Patentansprüche

1. Fahrzeugsitz (1), der umfasst:
- eine Sitzfläche (2),
- eine an der Sitzfläche (2) um eine Rotationsachse angelenkte Rückenlehne (3),
- ein erstes Verriegelungsorgan (4) der Rückenlehne (3) im Verhältnis zur Sitzfläche (2), das an einer der Seiten des Sitzes (1) positioniert ist und mit einer Entriegelungssteuerung zusammenarbeitet,
- ein zweites Verriegelungsorgan (5) der Rückenlehne (3) im Verhältnis zur Sitzfläche (2), das auf der anderen Seite des Sitzes (1) positioniert ist,
wobei das erste und zweite Verriegelungsorgan (4, 5) einerseits durch eine Übertragungsstange (6) synchronisiert sind, die an einem ihrer Enden (10) am ersten Verriegelungsorgan (4) befestigt ist, wobei eine Öffnung (9) in das andere Ende der Übertragungsstange (6) eingearbeitet ist, wobei eine Welle (11) mit dem zweiten Verriegelungsorgan (5) verbunden ist und sich in Richtung des ersten Verriegelungsorgans (4) erstreckt, wobei die Welle (11) in die Öffnung (9) mit einem Funktionsspiel eingesetzt ist, das es erlaubt, Positionsabweichungen der Verriegelungsorgane (4, 5) aufzunehmen, **dadurch gekennzeichnet, dass** die Öffnung (9) mindestens eine Abflachung (13) aufweist und andererseits die Welle (11) mindestens einen kegelstumpfartigen Abschnitt (12) aufweist, der mindestens eine Abflachung (14) aufweist.

2. Fahrzeugsitz (1) nach Anspruch 1, **dadurch gekennzeichnet, dass** das Ende der Übertragungsstange (6), das die Öffnung (9) aufweist, etwa die Form eines L hat, das einen ersten Abschnitt (7) aufweist, der sich in Längsrichtung der Übertragungsstange (6) erstreckt und einen zweiten Abschnitt (8), der eine Querlasche bildet, die sich ausgehend vom ersten Abschnitt (7) im rechten Winkel erstreckt, wobei die Öffnung (9) in den zweiten Abschnitt (8) eingearbeitet ist.

3. Fahrzeugsitz (1) nach Anspruch 1 oder 2, **dadurch gekennzeichnet, dass** der kegelstumpfartige Abschnitt (12) in Richtung des ersten Verriegelungsorgans (4) abnehmend ist.

4. Fahrzeugsitz (1) nach einem der Ansprüche 1 bis 3, **dadurch gekennzeichnet, dass** der kegelstumpfartige Abschnitt (12) allgemein wie ein Pyramidenstumpf mit quadratischer Basis aussieht.

5. Fahrzeugsitz (1) nach einem der Ansprüche 1 bis 4, **dadurch gekennzeichnet, dass** die Öffnung (9) eine etwa quadratische Form hat.

6. Fahrzeugsitz (1) nach einem der Ansprüche 1 bis 5, **dadurch gekennzeichnet, dass** er eine Fuge aufweist, die zwischen der Welle (11) und der Öffnung (9) angeordnet ist.
